# EUROPÄISCHE PATENTSCHRIFT

(11) **EP 4 100 803 B1**
(45) Veröffentlichungstag und Bekanntmachung des Hinweises auf die Patenterteilung: **14.08.2024**
(21) Anmeldenummer: 21721841.1
(22) Anmeldetag: 07.04.2021
(51) Int. Cl.: G05B 19/406

(54) **VERFAHREN UND VORRICHTUNG ZUM BETRIEB EINER MASCHINE MIT EINEM WERKZEUG**
METHOD AND DEVICE FOR OPERATING A MACHINE WITH A TOOL
PROCÉDÉ ET DISPOSITIF DE FONCTIONNEMENT D'UNE MACHINE AVEC UN OUTIL

(30) Priorität: 09.04.2020 EP 20168914
(43) Veröffentlichungstag der Anmeldung: 14.12.2022
(73) Patentinhaber: Siemens Aktiengesellschaft, 80333 München (DE)
(72) Erfinder: BUTZERIN, Andre, 6706 Bührs (AT); SCHALL, Daniel, 2020 Hollabrunn (AT); TRABESINGER, Stefan, 8074 Raaba-Grambach (AT)
(74) Vertreter: Siemens Patent Attorneys
(86) Internationale Anmeldenummer: PCT/EP2021/059068
(87) Internationale Veröffentlichungsnummer: WO 2021/204879

(56) Entgegenhaltungen:
- US-A1- 2019 098 035
- US-A1- 2019 210 176
- US-A1- 2019 294 144
- US-A1- 2020 082 245
- US-A1- 2020 104 224

## Beschreibung

Die Erfindung betrifft ein Verfahren und eine Vorrichtung zum Betrieb einer Maschine mit einem Werkzeug.

Die automatische Werkzeugbruchüberwachung (engl. "tool breakdown monitoring", TBM) ist eine wichtige Technologie der unbemannten Werkstätten und automatischen Produktionslinien für die CNC-Bearbeitung. Ein Werkzeugbruch kann zu einer Beschädigung des Werkzeugs beziehungsweise der Maschine und/oder des bearbeiteten Werkstücks und zu Ausfallzeiten der Maschine führen.

Aktuelle Lösungen berücksichtigen häufig Sensor-Daten von einer Werkzeugmaschine, wie Kraft- und Vibrationssensoren, und überwachen den Betrieb der Maschine schwellenwertbasiert, das heißt es erfolgt eine Überwachung von Minimum- und Maximum-Werten in den Signalen, wie eine Spindelleistung.

Dabei sind diese Lösungen häufig komplex und können Fehlalarme verursachen, da fest codierter Alarmgrenzen bestimmtes Betriebsverhalten nicht berücksichtigt werden. Ferner wird das Ausgeben Alarme nicht immer ausgelöst, auch wenn eine kritische Situation erreicht wird.

Durch eine falsche oder keine Alarmierung kann es zu einem unerwünschten Stillstand von Maschinen, aber auch zu Schäden an Maschine, Werkzeug oder Werkstück kommen.

In der Veröffentlichung US 2020/0104224 A1 wird aufgrund aufgezeichneter Daten eine Anomalie detektiert, indem mithilfe maschinellen Lernens eine erkannte Anomalie trainiert wird und bei der Erkennung weiterer Anomalien, welche erhöhte Rauschanteile in den zugrunde liegenden Sensordaten aufweisen, jeweils zum Vergleich herangezogen wird, um so die Erkennungsrate von Anomalien bei der Produktion von Werkstücken zu verbessern und die Werkstücke dementsprechend zu identifizieren.

Es wird jedoch nicht darauf eingegangen, dass sich im Laufe der Zeit vergrößernde Anomalien, oder auch durch Verschleiß oder Fertigungsparameter der Maschine hervorgerufene Anomalien reduziert oder vermieden werden sollen.

Beispielsweise sollen die eingesetzten Werkzeuge vor einer Beschädigung oder einem übermäßigen Verschleiß geschützt werden, falls eine zu hohe Vorschubgeschwindigkeit einer CNC-Fräse vorliegt. Durch einen entsprechenden Eingriff in die Produktion beziehungsweise den Herstellungsprozess soll die Verfügbarkeit des Werkzeugs beziehungsweise der Maschine verbessert werden. Somit kann ein Herstellungsprozess an einen zunehmend alternden beziehunsgweise verschleißenden Werkzeugzustand entsprechend angepasst werden.

In der Veröffentlichung US 2020/1 04224 A1 ist eine Anomalie-Erkennungsvorrichtung gezeigt, dessen Vorhersageeinheit einen Prozess durchführt, um bei jedem Zeitschritt von Zeitreihendaten Verteilungsparameter zu erhalten, die erforderlich sind, um eine kontinuierliche Wahrscheinlichkeitsverteilung auszudrücken, die für einen Verteilungszustand vorhergesagte Werte darstellt. Die Anomalie-Wert-Berechnungseinheit führt einen Prozess zum Berechnen eines Anomalie-Werts aus, unter Verwendung von Verteilungsparametern, die durch die Vorhersageeinheit erhalten wurden.

In der Veröffentlichung US 2020/082245 A1 ist ein Verfahren zum Erfassen von Anomalien in Zeitreihen dargestellt, die von Sensoren von Fertigungswerkzeugen empfangen werden. Ein Server speist einen Satz von Trainingszeitreihen in ein neurales Netzwerk, das konfiguriert ist, um ein Modell der Trainingszeitreihen abzuleiten, das Rekonstruktionsfehler der Trainingszeitreihenspuren minimiert. Der Server extrahiert einen Satz von eingegebenen Zeitreihen von einem oder mehreren Sensoren, die einem oder mehreren Herstellungswerkzeugen zugeordnet sind, die zum Herstellen eines Siliziumsubstrats konfiguriert sind. Der Server speist den Satz von Eingabe-Zeitreihenspuren in das trainierte neuronale Netzwerk ein, um einen Satz von Ausgabe-Zeitreihenspuren zu erzeugen, die basierend auf dem Modell rekonstruiert wurden. Der Server berechnet einen mittleren quadratischen Fehler zwischen einer ersten Eingabe-Zeitreihenspur des Satzes von Eingabe-Zeitreihenspuren und einer entsprechenden ersten Ausgabe-Zeitreihenspur des Satzes von Ausgabe-Zeitreihenspuren. Der Server erklärt für den Sensor, der der ersten eingegebenen Zeitreihenspur entspricht, eine vorliegende Anomalie, wenn der mittlere quadratische Fehler einen vorbestimmten Wert überschreitet.

In der Veröffentlichung US 2019/294144 A1 ist eine Anomalie-Erfassungsvorrichtung gezeigt, mit der eine Anomalie eines Bearbeitungszustands einer Werkzeugmaschine auf der Grundlage von Informationen über einen Abschnitt erfasst werden kann, in dem eine Bearbeitung bei einer werkzeugmaschinenbasierten Bearbeitung tatsächlich durchgeführt wird. Die Anomalie-Erfassungsvorrichtung erfasst eine Anomalie eines Bearbeitungszustands einer Werkzeugmaschine, die ein Werkstück mit einem Werkzeug bearbeitet. Die Werkzeugmaschine umfasst eine Bestimmungseinheit, die den Bearbeitungszustand bestimmt, indem sie Informationen verwendet, die sich auf einen tatsächlichen Schneidabschnitt bei der werkzeugbasierten Bearbeitung des Werkstücks in der Werkzeugmaschine beziehen. Die Bestimmungseinheit führt die Bearbeitungszustandsbestimmung durch Verwenden einer Abweichung in Position und Länge eines Abschnitts, der als der tatsächliche Schneidabschnitt erkannt wird, und einer physikalischen Größe in dem tatsächlichen Schneidabschnitt, die von der Werkzeugmaschine erfasst wird, durch.

Die Veröffentlichung US 2019/210176 A1 zeigt eine Anomalie-Erfassungsvorrichtung zum Erfassen von Anomalien eines Werkzeugs einer Werkzeugmaschine. Dabei ist eine Erfassungseinheit zum Erfassen mehrerer Messwerte bezüglich des Werkzeugs als Messdaten umfasst, sowie eine Normalmodell-Einheit zum Lernen der Messdaten und zum Erzeugen eines Normalmodells, und ferner eine Anomalie-Diagnoseeinheit zum Erfassen von Messdaten während der Bearbeitung nach Erzeugung des Normalmodells. Auf der Grundlage des Normalmodells wird diagnostiziert, ob die Messdaten normal oder anormal sind. Ferner ist eine Neudiagnose-Einheit zum Neudiagnostizieren von Messdaten umfasst, die von der Anomalie-Diagnoseeinheit als anormal diagnostiziert wurden.

Die Veröffentlichung US 2019/098035 A1 stellt ein Verfahren zum Erkennen von Anomalie-Ereignissen innerhalb einer Prozessumgebung bereit, welches auf einem Hybrid aus zentralisierten Klassifikations-Modellen und auf Randknoten basierenden Klassifikations-Modellen aufbaut. Ein Anomalie-Detektor weist einen Randknoten auf, welcher einen Gateway-Zugriff auf die Prozesssteuerungsumgebung bereitstellt. Ein erster Anomalie-Detektor umfasst ein erstes Klassifikations-Modell, sowie eine zweiten Anomalie-Detektor, der in einem Cloud-basierten Server implementiert ist. Einer Anomalie-Ereigniswarnung wird erzeugt, wenn zumindest der erste und/oder der zweite Anomalie-Detektor ein Anomalie-Ereignis erkennt.

Es ist Aufgabe der Erfindung ein Verfahren und eine Vorrichtung zur automatischen Überwachung einer Maschine mit einem Werkzeug bereitzustellen, wodurch ein Betrieb mit verbesserter Verfügbarkeit möglich ist.

Mit anderen Worten soll ein vorausschauender und vorgebender Betrieb einer Maschine mit einem Werkzeug ermöglicht werden.

Unter einem vorbeugenden Betrieb wird die Fähigkeit verstanden, mit welcher ein Werkzeugbruch erkannt wird und der aktuelle Vorgang, wie beispielsweise Bohren oder Fräsen, angehalten wird, um Schäden am Werkstück zu vermeiden.

Dabei kann ein Stillstand der Maschinen auftreten, aber die Bearbeitung des Werkstücks kann mit einem neuen Werkzeug fortgesetzt werden.

Bei einem vorausschauenden Betrieb wird versucht, einen Werkzeugbruch rechtzeitig vorherzusagen, um Schäden am Werkstück und am Werkzeug zu vermeiden.

Ein Stillstand der Maschinen kann auftreten, aber die Werkstückbearbeitung kann mit demselben oder einem neuen Werkzeug fortgesetzt werden.

Bei einem vorgebenden Betrieb soll ein Werkzeugbruch rechtzeitig vorhergesagt werden und Gegenmaßnahmen ergriffen werden, um Werkzeugbruch und einen Stillstand der Maschinen zu vermeiden.

Die erfindungsgemäße Aufgabe wird durch ein Verfahren eingangs genannter Art gelöst, wobei folgende Schritte ausgeführt werden:
a) Erfassen zumindest eines Betriebs-Datenpunktes bezüglich der Maschine und/oder des Werkzeugs,
b) Berechnen zumindest eines Schätz-Werts aus dem zumindest einen Betriebs-Datenpunkt auf Basis eines ML-Modells,
c) Bestimmen einer Anomalie in Form eines zeitdiskreten Anomalie-Werts auf Basis des zumindest einen Schätz-Werts durch einen Vergleich mit einem vorbestimmten Vergleichswert für die zumindest eine Schätzung und Erkennung einer Übereinstimmung des Schätz-Vergleichs,
d) Speichern des zeitdiskreten Anomalie-Werts in einem Speicher und aggregieren des zeitlichen Verlaufs des Anomalie-Werts zu einem geglätteten Anomalie-Wert,
e) Vergleichen des geglätteten Anomalie-Werts mit zumindest einem vorbestimmten Vergleichswert für die Anomalie und Erkennung einer Übereinstimmung des Anomalie-Vergleichs,
f) Ausgeben einer Steueroperation auf Basis des geglätteten Anomalie-Werts an die Maschine, wobei vorzugsweise die Steueroperation auf den Betrieb der Maschine und/oder des Werkzeugs einwirkt, der durch den zumindest einen Betriebs-Datenpunkt erfasst wird.

In der Statistik ist eine Anomalie (auch "Ausreißer") eine Beobachtung oder ein Ereignis, das so stark von anderen Ereignissen abweicht, dass der Verdacht geweckt wird, dass es durch einen anderen Mittelwert erzeugt wurde.

Anomalien in einem großen Datensatz können sehr komplizierten Mustern folgen, die in den meisten Fällen nur schwer zu erkennen sind.

Durch die Erfindung wird erreicht, dass ein vorausschauender und vorgebender Betrieb einer Maschine mit einem Werkzeug bei einer hohen Verfügbarkeit erfolgen kann.

Im Unterschied zum Stand der Technik kann nicht nur eine unerwünschte Anomalie zuverlässig erkannt werden, sondern auch rechtzeitig eine entsprechende Gegenmaßnahme eingeleitet werden und dadurch die Verfügbarkeit des Werkzeugs beziehungsweise der Maschine verbessert werden, sodass eine Anomalie in einer entsprechend angepassten Fortführung des Herstellungsprozesses nicht mehr weiterhin entsteht.

Beispielsweise kann der Herstellungsprozess nach einer Anomalie-Erkennung entsprechend modifiziert wird oder eine alternative Bearbeitung des Werkstücks initiiert wird, wie durch den Einsatz eines anderen Werkzeugs, die Änderung eines Prozessparameters wie die Drehzahl oder die Vortriebsgeschwindigkeit einer CNC-Fräsmaschine, oder auch die Erhöhung des Kühlmittelflusses.

Mit anderen Worten kann eine erkannte Anomalie dazu verwendet werden, um beispielsweise Hinweise auf den Verschleißgrad einer Maschine oder eines Werkzeugs zu liefern.

Es ist also nicht die Anomalie auf einem Werkstück an sich von Interesse zur Verbesserung des Stands der Technik, sondern die Maschine oder das Werkzeug, welches das Werkstück herstellt. Die Anomalie wird als entsprechendes Maß dafür verwendet.

Dies wird dadurch erreicht, dass im Schritt c) die Anomalie auf Basis des Schätz-Werts ermittelt wird. Mit anderen Worten wird der Schätzwert selbst als Maß herangezogen, eine Anomalie zu erkennen, ohne die aktuellen Datenpunkte direkt zu beurteilen. Dadurch ist es beispielsweise möglich den Verschleiß einer Maschine oder eines Werkzeugs rechtzeitig zu erkennen.

In einer Weiterbildung der Erfindung ist es vorgesehen, dass zumindest zwei Betriebs-Datenpunkte erfasst und weiterverarbeitet werden.

Dadurch kann der Betrieb der Maschine genauer überwacht werden, sowie Parameter-Kombinationen erfasst werden.

In einer Weiterbildung der Erfindung ist es vorgesehen, dass zumindest zwei Schätz-Werte berechnet und weiterverarbeitet werden.

Dadurch können Anomalien auf eine redundante Weise erkannt werden.

In einer Weiterbildung der Erfindung ist es vorgesehen, dass der zumindest eine Betriebs-Datenpunkt eine Dreh- oder Verschiebe-Geschwindigkeit, ein Drehmoment, eine Stromaufnahme oder eine Temperatur ist.

Dadurch kann der Betrieb der Maschine genau und auf eine besonders einfache Weise überwacht werden.

In einer Weiterbildung der Erfindung ist es vorgesehen, dass der zumindest eine Schätz-Wert mittels eines LSTM-Netzwerks berechnet wird.

Dadurch können Anomalien auf einfache Weise erkannt werden.

In einer Weiterbildung der Erfindung ist es vorgesehen, dass der zeitdiskrete Anomalie-Wert mittels eines "isolation forest"-Algorithmus bestimmt wird.

Dadurch können Anomalien auf einfache und besonders effiziente Weise erkannt werden.

Ein Isolationswald (engl. "isolation forest") ist ein unbeaufsichtigter (engl. "unsupervised") Lernalgorithmus zur Erkennung von Anomalien, der auf dem Prinzip der Isolierung von Anomalien anstelle der gängigsten Techniken zur Profilierung normaler Punkte basiert.

Die gebräuchlichsten Techniken zur Erkennung von Anomalien basieren auf der Erstellung eines Profils für das, was "normal" ist: Anomalien werden als solche Instanzen im Datensatz gemeldet, die nicht dem normalen Profil entsprechen.

Isolation Forest verwendet einen anderen Ansatz: Anstatt zu versuchen, ein Modell für normale Instanzen zu erstellen, werden anomale Punkte im Dataset explizit isoliert. Der Hauptvorteil dieses Ansatzes besteht in der Möglichkeit, Abtasttechniken in einem Ausmaß zu nutzen, das für die profilbasierten Methoden nicht zulässig ist, wodurch ein sehr schneller Algorithmus mit geringem Speicherbedarf erstellt wird.

In einer Weiterbildung der Erfindung ist es vorgesehen, dass der geglätteten Anomalie-Wert durch Bilden eines zeitlichen Mittelwerts erfolgt.

Dadurch können Anomalien genau und auf einfache Weise erkannt werden.

In einer Weiterbildung der Erfindung ist es vorgesehen, dass der Vergleichswert im Schritt e) durch ein Verfahren ermittelt wird, welches auf dem maschinellen Lernen beruht, wie ein Entscheidungs-Baum, ein Bayes-Netzwerk, ein neuronales Netzwerk, eine Multi-Class-Support-Vector-Maschine oder eine k-Nearest-Neighbor-Klassifikation.

In einer Weiterbildung der Erfindung ist es vorgesehen, dass zumindest eine Betriebs-Kennzahl beim Vergleich im Schritt f) berücksichtigt werden.

Die erfindungsgemäße Aufgabe wird auch durch eine Vorrichtung eingangs genannter Art gelöst, umfassend
ein Sensor-Modul mit zumindest einem Sensor-Mittel zur Ausführung des Schritts a),
ein Schätz-Modul zur Ausführung des Schritts b),
ein Anomalie-Detektions-Modul zur Ausführung des Schritts c),
ein Speicher-Modul zum Speichern im Schritt d),
ein Entscheidungsmodul zur Ausführung des Schritts e), und ein Ausgangs-Modul zur Ausführung des Schritts f),
wobei die Vorrichtung dazu eingerichtet ist, das erfindungsgemäße Verfahren auszuführen.

In einer Weiterbildung der Erfindung ist es vorgesehen, dass ferner ein Hilfsdaten-Modul umfasst ist, welches bei der Ausführung des Schritts e) angewandt wird.

Es ist klar, dass die genannten Module zur Kommunikation untereinander verbunden sind, entweder direkt oder indirekt.

In einer Weiterbildung der Erfindung ist es vorgesehen, dass das Schätz-Modul, das Anomalie-Detektions-Modul, das Speicher-Modul und das Entscheidungsmodul auf einer, von der Vorrichtung ferner umfassten und verbundenen Edge gelegen sind.

Dadurch wird erreicht, dass der Betrieb mit einer besonders hohen Verfügbarkeit überwacht werden kann, da ein lokaler Betrieb möglich ist.

Die so weitergebildete Vorrichtung kann somit ein verteiltes System sein, welches Komponenten wie Sensor-Mittel aufweist, die beispielsweise an der Maschine angeordnet sind, sowie weitere Module (wie ein Hilfsdaten-Modul), die von einer Edge-Rechenvorrichtung umfasst sind und dort ausgeführt werden. Die einzelnen Komponenten und Module sind miteinander verbunden und kommunizieren miteinander.

Durch ein derart verteiltes System können die genannten Module gemeinsam für den Betrieb mehrerer Maschinen verwendet werden, was das System einfacher, kostengünstiger und zuverlässiger macht.

Außerdem müssen keine Betriebsdaten in einer Cloud gespeichert werden, wodurch die Datensicherheit und die Privatsphäre verbessert werden.

Die Erfindung wird nachfolgend anhand eines in den beigeschlossenen Zeichnungen dargestellten Ausführungsbeispiels näher erläutert. In den Zeichnungen zeigt:
- Fig. 1: eine symbolische Darstellung einer Ausführungsbeispiels für das erfindungsgemäße Verfahren,
- Fig. 2: ein Beispiel für ein Flussdiagramm des Entscheidungs-Moduls nach der Fig. 1,
- Fig. 3: eine symbolische Darstellung eines Regelkreises,
- Fig. 4-5: Beispiele für zeitliche Darstellungen von Stromverläufen einer Maschine,
- Fig. 6-7: Beispiele für Darstellungen von Stromaufnahmen in Abhängigkeit einer Bohr-Tiefe,
- Fig. 8: ein Beispiel für eine Verschub-Geschwindigkeit in Abhängigkeit der Bohr-Tiefe.

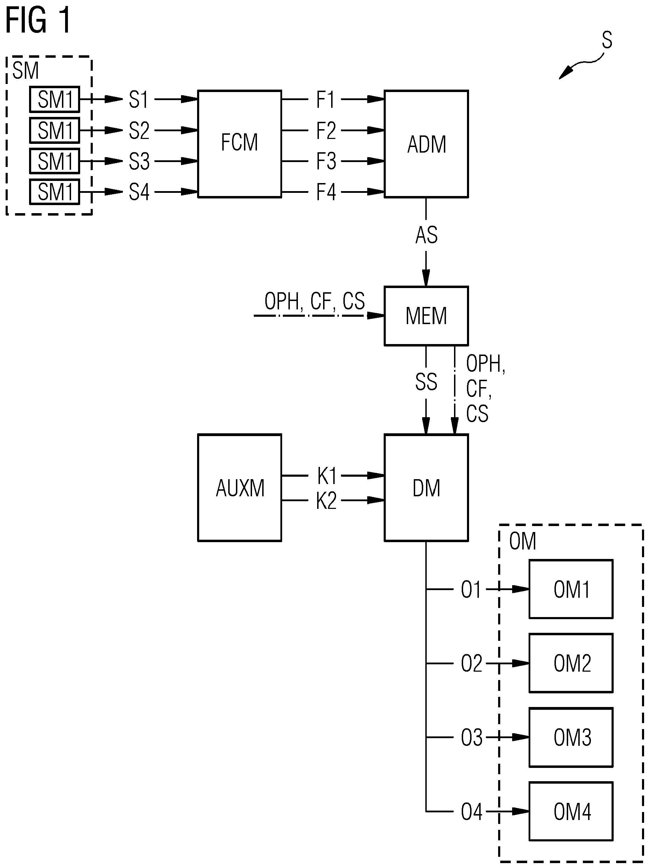

**Fig. 1** zeigt ein Ausführungsbeispiel der Erfindung in Form einer erfindungsgemäßen Vorrichtung, welche dazu eingerichtet ist, das erfindungsgemäße Verfahren auszuführen.

Das Verfahren weist folgende Schritte auf:
a) Erfassen zumindest eines Betriebs-Datenpunktes S1-S4 bezüglich der Maschine und/oder des Werkzeugs,
b) Berechnen zumindest eines Schätz-Werts F1-F4 aus dem zumindest einen Betriebs-Datenpunkt S1-S4 auf Basis eines ML-Modells,
c) Bestimmen einer Anomalie in Form eines zeitdiskreten Anomalie-Werts AS auf Basis des zumindest einen Schätz-Werts F1-F4 durch einen Vergleich mit einem vorbestimmten Vergleichswert für die zumindest eine Schätzung und Erkennung einer Übereinstimmung des Schätz-Vergleichs,
d) Speichern des zeitdiskreten Anomalie-Werts AS in einem Speicher und aggregieren des zeitlichen Verlaufs des Anomalie-Werts AS zu einem geglätteten Anomalie-Wert SS,
e) Vergleichen des geglätteten Anomalie-Werts SS mit zumindest einem vorbestimmten Vergleichswert für die Anomalie und Erkennung einer Übereinstimmung des Anomalie-Vergleichs,
f) Ausgeben einer Steueroperation O1-O4 auf Basis des geglätteten Anomalie-Werts SS an die Maschine, wobei vorzugsweise die Steueroperation auf den Betrieb der Maschine und/oder des Werkzeugs einwirkt, der durch den zumindest einen Betriebs-Datenpunkt S1-S4 erfasst wird.

Es kann daher optional eine Regelschleife geschaffen werden, um einen fortlaufenden Betrieb zu überwachen und um die Ausgabequalität der Werkstücke trotz einem zeitlich veränderlichem Maschinen- bzw. Werkzeugzustand sicherzustellen, indem Herstellungsparameter der Maschinen bzw. Werkzeuge überwacht und dementsprechend angepasst werden.

Es ist klar, dass durch die beschriebene Weise auch Materialtoleranzen des Werkstück-Rohlings, wie Legierungsverhältnisse entsprechend überwacht und in einen dementsprechend angepassten Herstellungsprozess einbezogen werden können.

Es ist besonders günstig, wenn zumindest zwei Betriebs-Datenpunkte S1-S4 erfasst und weiterverarbeitet werden, da die Erkennungswahrscheinlichkeit einer Anomalie-Erkennung dadurch steigt. So können beispielsweise mehrere Datenpunkte zu einer gemeinsamen Datenquelle aggregiert werden, welche einen neuen Datenpunkt bilden können.

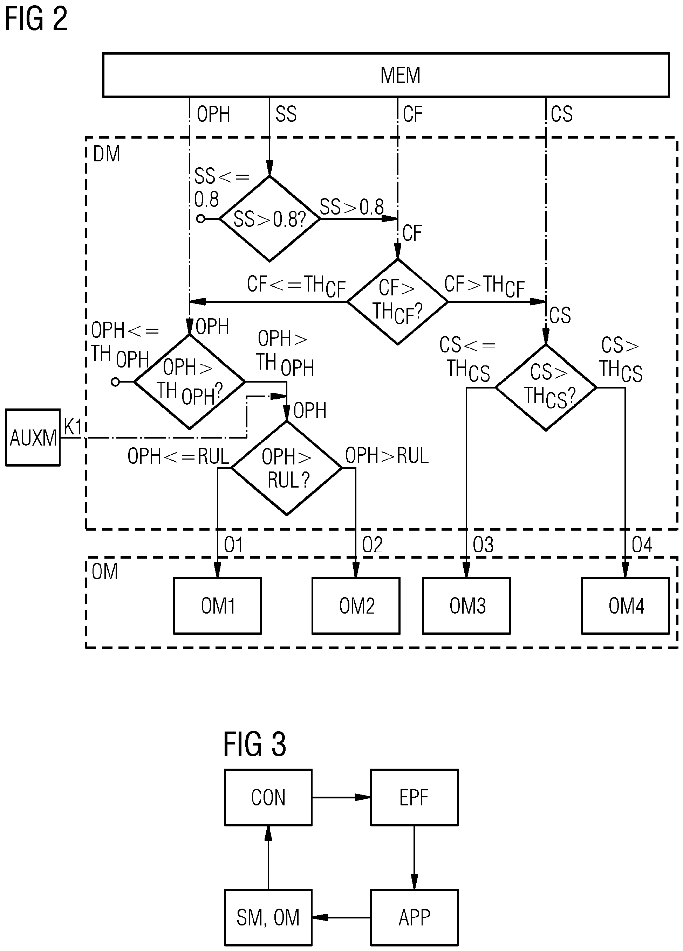

Da die Steueroperation optional auf den Betrieb der Maschine und/oder des Werkzeugs einwirkt, der durch den zumindest einen Betriebs-Datenpunkt erfasst wird, kann eine zukünftige Anomalie verringert oder vermieden werden, beispielsweise durch rechtzeitigen Austausch eines betroffenen, verschlissenen Werkzeugs. Weitere Ausführungen dazu sind in der Beschreibung der Fig. 2 angeführt.

In weiterer Folge ist es daher auch günstig, wenn zumindest zwei Schätz-Werte F1-F4 berechnet und weiterverarbeitet werden.

Ein Betriebs-Datenpunkt S1-S4 kann beispielsweise eine Dreh- oder Verschiebe-Geschwindigkeit, ein Drehmoment, eine Stromaufnahme oder eine Temperatur sein.

Dadurch ist eine kombinatorische Auswertung mehrerer Herstellungsparameter möglich, beispielsweise synergistische Auswirkung der Temperatur des Werkstücks sowie der Temperatur des Werkzeugs zu einem Herstellungs-Zeitpunkt.

Die Schätz-Werte F1-F4 können beispielsweise mittels eines LSTM-Netzwerks berechnet werden.

Der zeitdiskrete Anomalie-Wert AS kann beispielsweise mittels eines "isolation forest"-Algorithmus berechnet werden.

Der geglätteten Anomalie-Wert SS kann beispielsweise durch Bilden eines zeitlichen Mittelwerts bestimmt werden.

Der Vergleichswert im Schritt e) kann beispielsweise durch ein Verfahren ermittelt werden, welches auf dem maschinellen Lernen beruht, wie ein Entscheidungs-Baum, ein Bayes-Netzwerk, ein neuronales Netzwerk, eine Multi-Class-Support-Vector-Maschine (SVM) oder eine k-Nearest-Neighbor-Klassifikation (kNN).

Ferner kann zumindest eine Betriebs-Kennzahl K1, K2 beim Vergleich im Schritt f) berücksichtigt werden.

Die Vorrichtung zum Betrieb einer Maschine mit einem Werkzeug umfasst
- ein Sensor-Modul SM mit zumindest einem Sensor-Mittel SM1-SM4 zur Ausführung des Schritts a),
- ein Schätz-Modul FCM zur Ausführung des Schritts b),
- ein Anomalie-Detektions-Modul ADM zur Ausführung des Schritts c),
- ein Speicher-Modul MEM Speichern im Schritt d),
- ein Entscheidungsmodul DM zur Ausführung des Schritts e), und ein Ausgangs-Modul OM1-OM4 zur Ausführung des Schritts f),
- ein Hilfsdaten-Modul AUXM, welches bei der Ausführung des Schritts zur Berücksichtigung der Betriebs-Kennzahlen K1, K2 angewandt wird.

Die Maschine ist zur besseren Übersicht nicht in der Figur dargestellt. Es ist klar, dass die Sensor-Mittel mit der Maschine entsprechend verbunden sind, um Sensordaten der Maschine zu erfassen.

Die Ausgabe-Module OM1-OM4 stellen den Betriebszustand der Maschine dar, liefern Informationen über nötige Wartungs- oder Reparaturarbeiten und können auch durch ein gemeinsames Ausgabe-Modul OM gebildet sein.

**Fig. 2** zeigt ein Beispiel für ein Flussdiagramm des Entscheidungsmoduls DM aus der vorhergehenden Figur.

Das Speicher-Modul stellt dem Entscheidungsmodul DM den geglätteten Anomalie-Wert SS bereit.

Es erfolgt eine Prüfung, ob der geglättete Anomalie-Wert SS innerhalb eines Wertebereichs liegt, also größer als der Randwert 0.8 ist, welcher einem ersten vorbestimmten Vergleichswert für die Anomalie entspricht.

Somit erfolgt eine Erkennung einer Übereinstimmung des Anomalie-Vergleichs.

Trifft dies nicht zu, liegt keine Anomalie vor und die Maschine kann weiter betrieben werden.

Wird der Randwert jedoch überschritten, so wird in weiterer Folge versucht, die Ursache der Anomalie genauer zu eruieren.

Dies erfolgt durch einen Abgleich mit Betriebskenngrößen.

Es wird geprüft, ob eine Schneide-Kraft CF (engl. "cutting force") unter einem vorgegebenen Schwellwert TH_{CF} liegt.

Falls ja, wird weiter geprüft, ob die maximal vorgesehenen Betriebsstunden OPH (engl. "operation hours") für die Maschine erreicht wurden, indem ein Vergleich mit einem vorgegebenen Schwellwert TH_{OPH} durchgeführt wird. Unter Berücksichtigung der Betriebs-Kennzahl K1, welche eine Rest-Betriebszeit RUL (engl. "Remaining Useful Lifetime") umfasst und vom Hilfsdaten-Modul AUXM bereitgestellt wird, erfolgt eine weitere Prüfung, ob die Betriebsstunden OPH noch innerhalb der Rest-Betriebszeit RUL liegt.

Die Kennzahl K1, K2 kann auch ein anderer, sog. "key performance indicator" KPI der Maschine sein.

Falls dies zutrifft, kann über das Ausgabe-Modul OM1 eine Ausgabe 01 "Prüfe Werkzeug-Aufnahme" erfolgen.

Anderenfalls kann über das Ausgabe-Modul OM2 eine Ausgabe O2 "Ersetze Werkzeug" erfolgen.

Falls die Prüfung der Schneide-Kraft CF über einem vorgegebenen Schwellwert TH_{CF} liegt, so wird weiter geprüft, ob eine Schneide-Geschwindigkeit CS unter einem vorgegebenen Schwellwert TH_{CS} liegt.

Falls dies zutrifft, kann über das Ausgabe-Modul OM3 eine Ausgabe 03 "Prüfe Schmierung" erfolgen.

Anderenfalls kann über das Ausgabe-Modul OM4 eine Ausgabe O4 "Prüfe CNC Programm/Modell" erfolgen.

Die Schneide-Kraft CF, die Schneide-Geschwindigkeit CS und die maximal vorgesehenen Betriebsstunden OPH kann beispielsweise über das Speicher-Modul MEM bereitgestellt werden, oder auch direkt von einem entsprechenden Sensor-Mittel SM1-SM4, welches jeweils mit der Maschine verbunden ist, bezogen werden.

**Fig. 3** zeigt ein Beispiel für einen Regelkreis der Maschine mit einer erfindungsgemäßen Vorrichtung, nämlich für das Ausgeben einer Steueroperation O1-O4 auf Basis des geglätteten Anomalie-Werts SS an die Maschine, wobei optional die Steueroperation auf den Betrieb der Maschine und/oder des Werkzeugs einwirkt, der durch den zumindest einen Betriebs-Datenpunkt S1-S4 erfasst wird.

Ein Kontrollsystem CON erfasst durch ein Sensor-Modul SM relevante Größen zur Erfassung verschiedener Betriebseigenschaften.

Das Kontrollsystem CON liefert diese Daten an eine Edge-Plattform EPF, in welcher die Auswertung der Betriebs-Datenpunkte S1-S4 mittels einem oder mehreren Anwendungsprogrammen APP erfolgt.

Mit anderen Worten sind in diesem Beispiel das Schätz-Modul FCM, das Anomalie-Detektions-Modul ADM, das Speicher-Modul MEM und das Entscheidungsmodul DM optional auf der Edge-Plattform EPF gelegen.

Die Anwendungsprogramme APP umfassen Algorithmen, welche auf maschinellem Lernen beruhen, und steuern über das Ausgangsmodul OM die Maschine mittels entsprechender Aktuatoren oder Anzeigen an.

Dadurch wird eine Anordnung mit einem Regelkreis geschaffen, mit welchem der Betrieb der Maschine mit dem Werkzeug auf optimale Weise erfolgen kann.

Die gezeigten Komponenten zeigen ein Beispiel für ein verteiltes, vernetztes System, welches auf der Edge EPF und nahe der Maschine angeordnet ist. Je nach Anforderungen können auch andere Verteilungen der Komponenten vorteilhaft sein.

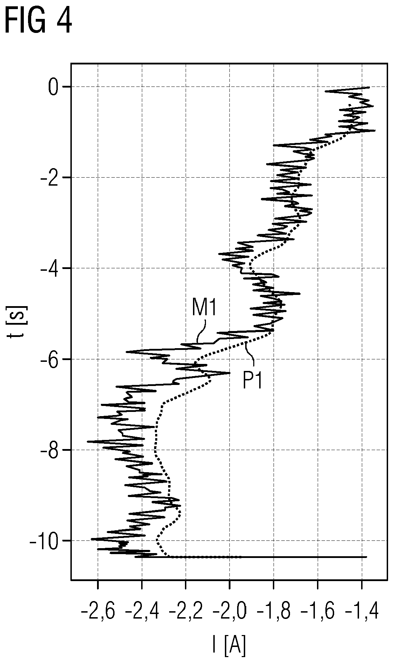

**Fig. 4** bis **Fig. 8** zeigen Beispiele für Betriebsnenngrößen, welche die Betriebs-Datenpunkte S1-S4 bilden können.

**Fig. 4** zeigt einen zeitlichen Verlauf einer Stromaufnahme der Maschine, in diesem Beispiel der Aufnahmestrom der Spindel einer CNC-Maschine.

In der Kurve M1 ist der gemessene Strom aufgetragen.

In der Kurve P1 ist der prognostizierte, geglättete Anomalie-Wert (engl. "smootheded score") zu erkennen, welcher ein Beispiel für den geglättete Anomalie-Wert SS gemäß den vorhergehenden Figuren bilden kann.

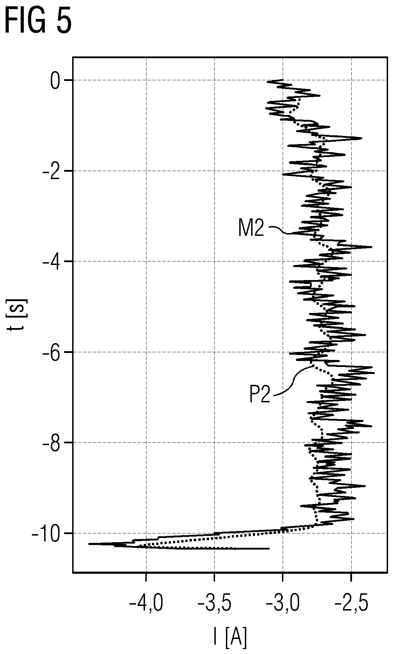

**Fig. 5** zeigt einen zeitlichen Verlauf einer weiteren Stromaufnahme der Maschine.

In der Kurve M2 ist der gemessene Strom aufgetragen.

In der Kurve P2 ist der geglättete Anomalie-Wert (engl. "smootheded score") zu erkennen, welcher wiederum ein Beispiel für den geglättete Anomalie-Wert SS gemäß den vorhergehenden Figuren bilden kann.

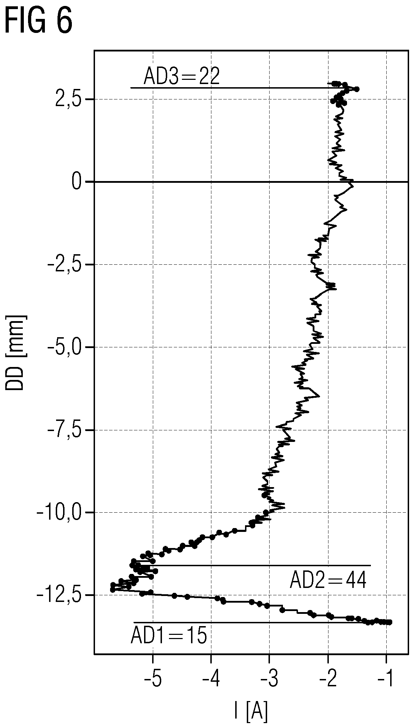

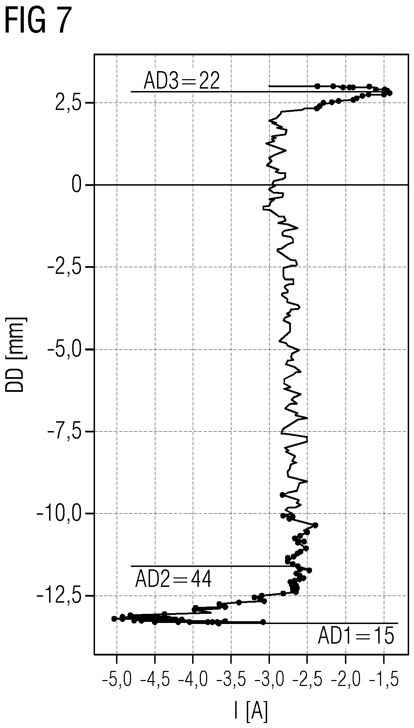

**Fig. 6** und **Fig. 7** zeigen zeitliche Verläufe einer Stromaufnahme I der Maschine in Abhängigkeit der Bohr-Tiefe DD (engl. "drilling depth").

Es sind jeweils Anomalie-Dichten AD1-AD3 eingezeichnet, welche als Kriterium zur Detektion einer Anomalie herangezogen werden können.

Die Anomalie-Dichten AD1-AD3 können aus prognostizierten Schätz-Werten oder Anomalie-Werten, aber auch aus geglätteten Anomalie-Verläufen abgeleitet werden.

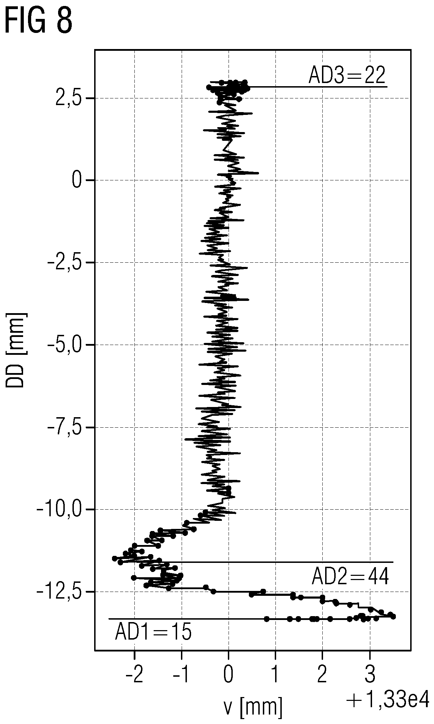

**Fig. 8** zeigt einen Verlauf der Verschub-Geschwindigkeit in Abhängigkeit der Bohr-Tiefe.

Es sind wiederum Anomalie-Dichten AD1-AD3 eingezeichnet.

### Bezugszeichenliste:

- AD1-AD3: Anomalie-Dichte
- ADM: Anomalie-Detektions-Modul
- APP: Anwendungsprogramm mit künstlicher Intelligenz auf Rechenvorrichtung
- AS: zeitdiskreter Anomalie-Wert, "anomaly score"
- AUXM: Hilfsdaten-Modul, "auxiliary data module"
- CF: Schneide-Kraft, "cutting force"
- CON: Kontrollsystem, "control system"
- CS: Schneide-Geschwindigkeit, "cutting speed"
- DD: Bohrtiefe, "drilling depth"
- DM: Entscheidungsmodul, "desicion module"
- EPF: Rechenvorrichtung, "edge platform"
- F1-F4: geschätzter Wert
- FCM: Schätz-Modul, "forecasting module"
- K1, K2: Kennzahl, "key performance indicator", KPI
- M1, M2: gemessenen Wert
- MEM: Speicher-Modul
- O1-O4: Ausgangswert
- OM, OM1-OM4: Ausgangs-Modul
- OPH: Wert für Betriebsstunden, "operation hours"
- P1, P2: prognostizierter Wert
- RUL: Wert für "sinnvolle Restzeit", "remaining useful life"
- S1-S4: Eingangssignale
- SM: Sensor-Modul
- SM1-SM4: Sensor-Mittel
- SS: geglätteter Anomalie-Wert, "smootheded score"
- TH_{CF}, TH_{CS}, TH_{OPH}: Schwellwert
- v: Geschwindigkeit

## Patentansprüche

1. Verfahren zum Betrieb einer Maschine mit einem Werkzeug, wobei folgende Schritte ausgeführt werden:
a) Erfassen zumindest eines Betriebs-Datenpunktes (S1-S4) bezüglich der Maschine und/oder des Werkzeugs,
b) Berechnen zumindest eines prognostizierten Schätz-Werts (F1-F4) aus dem zumindest einen Betriebs-Datenpunkt (S1-S4) auf Basis eines ML-Modells,
c) Bestimmen einer Anomalie in Form eines zeitdiskreten Anomalie-Werts (AS) auf Basis des zumindest einen Schätz-Werts (F1-F4) durch einen Vergleich mit einem vorbestimmten Vergleichswert für die zumindest eine Schätzung und Erkennung einer Übereinstimmung des Schätz-Vergleichs,
d) Speichern des zeitdiskreten Anomalie-Werts (AS) in einem Speicher und aggregieren des zeitlichen Verlaufs des Anomalie-Werts (AS) zu einem geglätteten Anomalie-Wert (SS),
e) Vergleichen des geglätteten Anomalie-Werts (SS) mit zumindest einem vorbestimmten Vergleichswert für die Anomalie und Erkennung einer Übereinstimmung des Anomalie-Vergleichs,
f) Ausgeben einer Steueroperation (01-04) auf Basis des geglätteten Anomalie-Werts (SS) an die Maschine.

2. Verfahren nach dem vorhergehenden Anspruch, wobei zumindest zwei Betriebs-Datenpunkte (S1-S4) erfasst und weiterverarbeitet werden.

3. Verfahren nach dem vorhergehenden Anspruch, wobei zumindest zwei Schätz-Werte (F1-F4) berechnet und weiterverarbeitet werden.

4. Verfahren nach einem der vorhergehenden Ansprüche, wobei der zumindest eine Betriebs-Datenpunkt (S1-S4) eine Dreh- oder Verschiebe-Geschwindigkeit, ein Drehmoment, eine Stromaufnahme oder eine Temperatur ist.

5. Verfahren nach einem der vorhergehenden Ansprüche, wobei der zumindest eine Schätz-Wert (F1-F4) mittels eines Long Short-Term Memory-Netzwerks berechnet wird.

6. Verfahren nach einem der vorhergehenden Ansprüche, wobei der zeitdiskrete Anomalie-Wert (AS) mittels eines "isolation forest"-Algorithmus bestimmt wird.

7. Verfahren nach einem der vorhergehenden Ansprüche, wobei der geglätteten Anomalie-Wert (SS) durch Bilden eines zeitlichen Mittelwerts erfolgt.

8. Verfahren nach einem der vorhergehenden Ansprüche, wobei der Vergleichswert im Schritt e) durch ein Verfahren ermittelt wird, welches auf dem maschinellen Lernen beruht, wie ein Entscheidungs-Baum, ein Bayes-Netzwerk, ein neuronales Netzwerk, eine Multi-Class-Support-Vector-Maschine oder eine k-Nearest-Neighbor-Klassifikation.

9. Verfahren nach einem der vorhergehenden Ansprüche, wobei zumindest eine Betriebs-Kennzahl (K1, K2) beim Vergleich im Schritt e) berücksichtigt werden.

10. Vorrichtung zum optimalen Betrieb einer Maschine mit einem Werkzeug, umfassend
ein Sensor-Modul (SM) mit zumindest einem Sensor-Mittel (SM1-SM4) zur Ausführung des Schritts a),
ein Schätz-Modul (FCM) zur Ausführung des Schritts b), ein Anomalie-Detektions-Modul (ADM) zur Ausführung des Schritts c),
ein Speicher-Modul (MEM) zum Speichern im Schritt d),
ein Entscheidungsmodul (DM) zur Ausführung des Schritts e), und ein Ausgangs-Modul (OM, OM1-OM4) zur Ausführung des Schritts f),
wobei
die Vorrichtung dazu eingerichtet ist, das Verfahren nach einem der Ansprüche 1 bis 8 auszuführen.

11. Vorrichtung nach dem vorhergehenden Anspruch, wobei das Schätz-Modul (FCM), das Anomalie-Detektions-Modul (ADM), das Speicher-Modul (MEM) und das Entscheidungsmodul (DM) auf einer, von der Vorrichtung umfassten und verbundenen Edge gelegen sind.

## Claims

1. Method for operating a machine with a tool, wherein the following steps are executed:
a) capturing at least one operating data point (S1-S4) for the machine and/or the tool,
b) calculating at least one forecast estimate value (F1-F4) from the at least one operating data point (S1-S4) on the basis of an ML model,
c) determining an anomaly in the form of a discrete-time anomaly value (AS) based on the at least one estimate value (F1-F4) by a comparison with a predetermined comparison value for the at least one estimate and detection of a match for the estimate comparison,
d) storing the discrete-time anomaly value (AS) in a memory and aggregating the trend in the anomaly value (AS) over time to form a smoothed anomaly value (SS),
e) comparing the smoothed anomaly value (SS) with at least one predetermined comparison value for the anomaly and detecting a match for the anomaly comparison,
f) outputting a control operation (01-04) to the machine on the basis of the smoothed anomaly value (SS).

2. Method according to the preceding claim, wherein at least two operating data points (S1-S4) are captured and further processed.

3. Method according to the preceding claim, wherein at least two estimate values (F1-F4) are calculated and further processed.

4. Method according to one of the preceding claims, wherein the at least one operation datapoint (S1-S4) is a rotary or displacement speed, a torque, a current consumption or a temperature.

5. Method according to one of the preceding claims, wherein the at least one estimate value (F1-F4) is calculated by means of an LSTM network.

6. Method according to one of the preceding claims, wherein the discrete-time anomaly value (AS) is determined by means of an "isolation forest" algorithm.

7. Method according to one of the preceding claims, wherein the smoothed anomaly value (SS) is carried out by forming a temporal average value.

8. Method according to one of the preceding claims, wherein the comparison value is determined in step e) by means of a method, which is based on machine learning, such as a decision tree, a Bayesian network, a neural network, a multi-class support vector machine or a k-nearest neighbour classification.

9. Method according to one of the preceding claims, wherein at least one operating characteristic number (K1, K2) is taken into consideration in the comparison in step e).

10. Apparatus for optimal operation of a machine with a tool, comprising
a sensor module (SM) with at least one sensor means (SM1-SM4) for executing step a),
an estimate module (FCM) for executing step b),
an anomaly detection module (ADM) for executing step c),
a storage module (MEM) for storage in step d),
a decision module (DM) for executing the step e), and an output module (CM, OM1-OM4) for executing step f),
wherein the apparatus is designed to execute the method according to one of claims 1 to 8.

11. Apparatus according to the preceding claim, wherein the estimate module (FCM), the anomaly detection module (ADM), the storage module (MEM) and the decision module (DM) are placed on an edge included in and connected by the apparatus.

## Revendications

1. Procédé de fonctionnement d'une machine avec un outil, dans lequel les étapes suivantes sont exécutées :
a) saisie d'au moins un point de données de fonctionnement (S1-S4) concernant la machine et/ou l'outil,
b) calcul d'au moins une valeur estimée pronostiquée (F1-F4) à partir dudit au moins un point de données de fonctionnement (S1-S4) sur la base d'un modèle ML,
c) détermination d'une anomalie sous la forme d'une valeur d'anomalie discrète dans le temps (AS) sur la base de ladite au moins une valeur estimée (F1-F4) en la comparant à une valeur de comparaison prédéterminée pour ladite au moins une estimation, et détection d'une concordance de ladite comparaison d'estimation,
d) enregistrement de la valeur d'anomalie discrète dans le temps (AS) dans une mémoire et agrégation de l'évolution temporelle de la valeur d'anomalie (AS) en une valeur d'anomalie lissée (SS),
e) comparaison de la valeur d'anomalie lissée (SS) avec au moins une valeur de comparaison prédéterminée pour l'anomalie, et détection d'une concordance de la comparaison d'anomalie,
f) émission d'une opération de commande (01-04) sur la base de la valeur d'anomalie lissée (SS) à la machine.

2. Procédé selon la revendication précédente, dans lequel au moins deux points de données de fonctionnement (S1-S4) sont saisis et traités.

3. Procédé selon la revendication précédente, dans lequel au moins deux valeurs estimées (F1-F4) sont calculées et traitées.

4. Procédé selon l'une des revendications précédentes, dans lequel le au moins un point de données de fonctionnement (S1-S4) est une vitesse de rotation ou de translation, un couple, une consommation de courant ou une température.

5. Procédé selon l'une des revendications précédentes, dans lequel la au moins une valeur estimée (F1-F4) est calculée au moyen d'un réseau de mémoire à long terme/court terme.

6. Procédé selon l'une des revendications précédentes, dans lequel la valeur d'anomalie discrète dans le temps (AS) est déterminée au moyen d'un algorithme de « forêt d'isolation ».

7. Procédé selon l'une des revendications précédentes, dans lequel la valeur d'anomalie lissée (SS) est obtenue en calculant une moyenne temporelle.

8. Procédé selon l'une des revendications précédentes, dans lequel la valeur de comparaison à l'étape e) est déterminée par un procédé basé sur l'apprentissage automatique, tel qu'un arbre de décision, un réseau bayésien, un réseau neuronal, une machine vectorielle à support multiclasse ou une classification des k plus proches voisins.

9. Procédé selon l'une des revendications précédentes, dans lequel au moins un ratio d'exploitation (K1, K2) est pris en compte dans la comparaison à l'étape e).

10. Dispositif de fonctionnement optimal d'une machine avec un outil, comprenant un module de détection (SM) avec au moins un moyen de détection (SM1-SM4) pour exécuter l'étape a), un module d'estimation (FCM) pour exécuter l'étape b), un module de détection d'anomalies (ADM) pour exécuter l'étape c), un module d'enregistrement (MEM) pour l'enregistrement à l'étape d), un module de décision (DM) pour exécuter l'étape e), et un module de sortie (CM, OM1-OM4) pour exécuter l'étape f), dans lequel le dispositif est adapté pour exécuter le procédé selon l'une quelconque des revendications 1 à 8.

11. Dispositif selon la revendication précédente, dans lequel le module d'estimation (FCM), le module de détection d'anomalies (ADM), le module d'enregistrement (MEM) et le module de décision (DM) sont situés sur une limite incluse et reliée par le dispositif.
